Europäisches Patentamt

European Patent Office

Office européen des brevets

(19)

(11) Publication number: **0 424 577 A1**

(12) **EUROPEAN PATENT APPLICATION**

(21) Application number: 89202715.2

(22) Date of filing: 26.10.89

(51) Int. Cl.⁵: **B60L 11/18**

(43) Date of publication of application:
**02.05.91 Bulletin 91/18**

(84) Designated Contracting States:
**AT BE CH DE ES FR GB GR IT LI NL SE**

(71) Applicant: **MAHARISHI TECHNOLOGY
CORPORATION B.V.
Zeilweg 17
NL-8243 PK Lelystad(NL)**

(72) Inventor: **Ananthakrishna, Anil
14 Alexandra Street
Richmond Town, Bangalore 560 025(IN)**

(74) Representative: **de Bruijn, Leendert C. et al
Nederlandsch Octrooibureau
Scheveningseweg 82 P.O. Box 29720
NL-2502 LS 's-Gravenhage(NL)**

(54) Electric traction system.

(57) An electric traction system, in particular for a vehicle or vessel, comprising main traction storage batteries, and range extending batteries, electrical charge means for charging said range extending battery and battery switch means to connect the range extending batteries in parallel with the main storage batteries for charging or backing up the traction storage batteries. The electrical traction system also comprising two sets of traction motors, which can be connected to the storage battery individually and successively for driving the vehicle or vessel.

EP 0 424 577 A1

## ELECTRIC TRACTION SYSTEM.

The present invention relates to an electric traction system, in particular for a vehicle or vessel, comprising a set of traction motors and traction storage batteries. In particular the present invention relates to an electric traction system without an additional internal-combustion engine and without power supply through trolley wires.

Owing primarily to the weight and limited capability of storage batteries, such electric vehicles and vessels have generally been more expensive and less acceptable. This limited capability of the storage batteries limits, the driving range between recharging in general to about 60 km. Recharging the batteries requires much time and apart from the vehicle base station there are only few recharging stations.

The object of the present invention is to provide an electric traction system which in particular gives the vehicle or vessel a wider range between recharging the batteries as well as a higher efficiency. Therefore according to the present invention the traction system comprises range extending batteries, which can be connected to electrical supply means, such as the mains or solar cells for charging said range extending batteries and battery switch means to connect these range extending batteries in parallel with the main storage batteries for charging or backing up the storage batteries.

The capacity of the range extending batteries is about 20% of the capacity of the main storage batteries.

Also the traction system comprises a battery charging control system, which switches the range extending battery and the main storage batteries in parallel between traction battery voltages of 1.57 and 2.41 Volt per cell.

The traction system of the present invention preferably also comprises a second set of traction motors, which can be connected to the storage batteries separately from the first above mentioned set of traction motors. Both sets of traction motors can drive the same vehicle gear box.

Preferably each traction motor of one set comprises a thermostatic device controlling common traction motor switch means, such that upon exceeding a predetermined temperature in one traction motor of a set, this traction motor set will be switched off and the other traction motor set will be switched on. Also each traction motor set comprises load detecting means, controlling said common traction motor switch means, such that upon exceeding a predetermined load in one traction motor set the other traction motor set will be switched on in parallel to the first traction motor set.

The motors of each set are DC-motors and each set may comprise one or more motor.

The present invention provides for the incorporation of advanced electrical EV-components to power a standard four-wheeler car and placed together in an original design configuration. Hence the invention provides a cost effective commercially viable sturdy, safe, silent, non-polluting means of transport.

The power pack comprising battery charger means, charged by the mains or solar cells, storage battery, electronic speed controller means, motor, gear box, differential transmission to the front or rear wheels, all are located within the vehicle. The power pack is selected to suit a given car and is mounted in the car ensuring for easy service access, safety and efficient performance economics.

The main traction storage batteries preferably will be one of two types, i.e. lead acid, or nickel iron type. Each of the above battery systems offer various levels of cost, energy power, life weight, complexity and packaging economics.

The traction motors preferably are of the state of art type, i.e. a series field DC-motor with 80% efficiency and four pole configuration and in particular designed for traction.

The electronic speed controller means is built out of Field Effect Transistors, which is a state of art technology. The electronic speed controller means preferably functions at 15 kHz and practically noiseless. The electronic speed controller means can be sealed and is maintenance-free. It is protected from over voltage, over current, reverse voltage, and provided with high temperature cut off protection. Also the electronic speed controller menas is designed with a ramp circuitry. Even if the throttle is applied totally, the ramp circuitry will provide a linearly increasing voltage with respect to time so that the vehicle will not jump or take off jerkly.

The electronic speed controller means is designed to sense the load torque requirements and incorporates a sensitive circuitry which provides for low speed operation after 80% discharge of the main storage batteries maintaining battery voltage drop within preset safe conditions.

The electronic speed controller means constitutes; a) pulse width modulation, b) total free spin of traction system when accelerator is released.

Also the vehicle of vessel is provided with manual transmission giving it a 85-99% efficiency.

The battery charger operates automatically and provided with following features;

a) a DC-input circuit with ground fault interrupter for possible insulation failures,

b) a current controle means controls the total input current,

c) the charger functions are current limited and voltage limited with a temperature compensated end of charge voltage.

d) the charge shut off is done by a digital timer activated by a current sensing logic circuit when the battery system is fully charged.

The range extending batteries preferably are of higher energy density and lower weight. These range extending batteries are also used for vehicle heating, lighting, etc. Preferaby the range extending batteries are of similar voltage as the main traction batteries but of 1/5 the capacity of this main traction batteries and of the high energy density nickel cadmium, zinc bromide, sodium sulphur or aluminium air type.

The combination of main storage batteries and above range extending batteries provides a 20% reduction in battery weight and an increase in energy capacity by 40%.

This provides for high power capability for short duration, using the lead acid main traction batteries and longèr operational time due to the high energy density of the NICAD range extending batteries.

Thus the combination of the lead acid main storage batteries and the NICAD range extending batteries provides for surge power and constant speed operational requirements of the vehicle.

In a preferable gear traction system of the present invention two motors are mechanically connected to the gear box in parallel wherein the two motors are selected for operation such that when more power has to be transmitted to the wheels for acceleration and maximum speed requirements the motors will be energized simultaneously. In normal city use only one motor will be used and the motors will be switched off for operation alternately through two independent electric traction controllers in a specific operation cycle, maintaining balance of temperature to ensure optimum efficient motor and controller performance. This provides for lighter motors, lower current controllers and production economics.

Also in the event of failure of one motor or one motor speed controller means the operator of the vehicle would not be standed and can drive the vehicle with the operating motor speed controller means to a repair station.

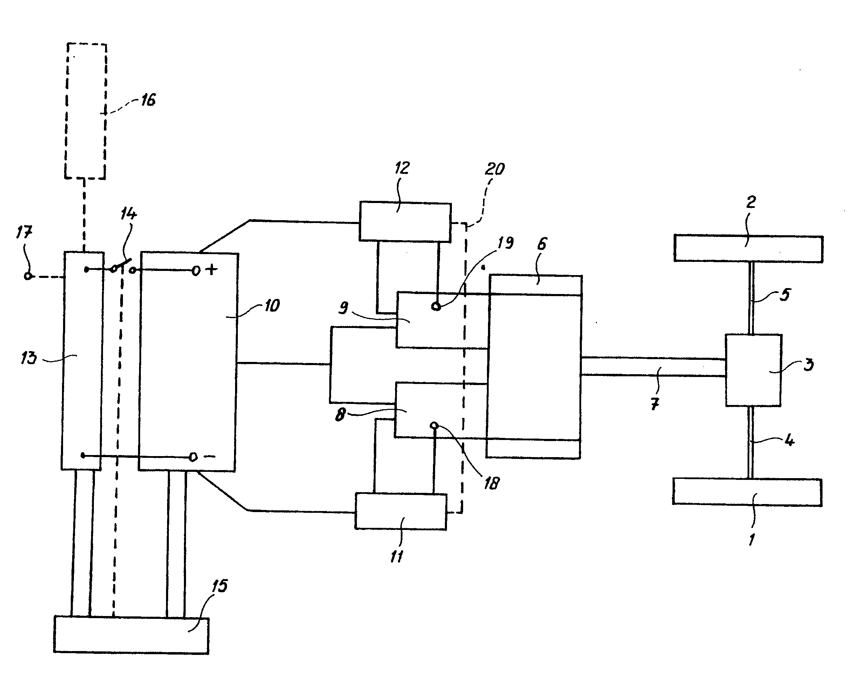

The invention now will be further explained with reference to the drawing. This drawing shows schematically and as an example only the components which together contstitute an electrical traction system of the present invention.

In this figure two rear wheels 1 and 2 of a vehicle are shown, which rear wheels are driven by a differential 3 through shafts 4 and 5. The differential 3 is driven itself by the gear box 6 through shaft 7. These electrical DC-motors 8 and 9 are mechanically connected with the gear box 6. These motors can function independently. Upon turning on and off each motor will be coupled and decoupled respectively with the gear wheels in the gear box 6.

Motors 8 and 9 are powered by the main storage battery 10 through electrical speed control means 11 and 12.

Apart from this mean storage battery 10 use is made according to the present invention of a range extending battery 13.

This range extending battery 13 can be connected with the main storage battery 10 via switch 14 under the control of the battery charge system 15.

The range extending battery 13 can be charged from the mains at 17, but also for instance from solar cells, when the vehicle is running.

At usually traffic speed in towns one of the motors 8 or 9 only is driving the vehicle, which is controlled by the electronic speed control means 11 and 12. When, however, the vehicle speed drops too much, for instance when driving up hill or when driving off from traffic lights and accelerating, the two motors 8 and 9 will automatically be turned on in parallel by the electronic speed control means 11 and 12. This parallel turn on action will be mainly based on the motor load in combination with the accelerator pedal position. As soon as the usual speed is reached, one of the motors will be turned off again automatically. Which motor will be turned off partly depends on the motor internal temperature which is constantly measured by temperature sensitive means 18 and 19, sensing the main winding temperature for instance. The temperature senstive means control the electronic speed control means 11 and 12 in such a way that an electrical motor reaching a predetermined high temperature, will be automatically turned off by the belonging electronic speed control means. Above this predetermined maximum temperature the motor efficiency starts to decrease too much because of increasing internal resistance.

Therefore, during normal traffic one motor will be turned on driving the vehicle and the other motor turned off, so that it can cool down. This will be reversed as soon as the driving motor reaches the above predetermined high temperature. When this hot motor will be turned off the other, cool motor, will be turned on by the two electronic speed control means 11 and 12. To control this alternating switching operation, each of the electronic speed control means is under the control of the other speed control means, which is shown by the interrupted line 20. Also the accelerator pedal (not shown) acts on the electronic speed control means, but this pedal cannot influence which motor or whether all motors will be turned on.

The motors 8 and 9 in general will receive their traction current from the main storage battery 10 only. This main storage battery 10 during normal operation will be trickle charged by the range extending battery 13 via the battery charge control system 15, with switch 14 opened, as shown.

When upon driving the vehicle the voltage of the main storage battery drops too much, for instance below 1,57 Volt per cell using a lead acid battery, which is measured by the battery charge control system 15, the range extending battery 13 will be connected in parallel with the main storage battery by turning on switch 14. The range extending battery now powers the motors 8 and/or 9 as well. Switch 14 will be opened anyhow and also trickle charging will be stopped as soon as the cell voltage of the main storage battery 10 reaches 2,14 Volt, which is also under the control of the battery charge control system 15.

The range extending battery 13 can be charged in different ways. In general by the mains 17 at a charging station, but also by solar cell 16, which can be mounted on a vehicle. On a vessel a wind generator could be used as well.

In a test vehicle two series field DC motors of 72 Volt were used, each having a capacity of 5 kW. The main storage battery had an open circuit voltage of 72 V and a capacity of 180 AH (ampere hours). Its weight was 366 kg and energy density 36 Wh/kg. The range extending battery had an open circuit voltage of 72 V and a capacity of 70 AH. Its weight was 100 kg and energy density 50 Wh/kg. The energy density of the combined battery system was 42 Wh/kg.

Driving the vehicle with the main storage battery only a maximum distance of 68 km between recharging could be covered. Together with the range extending battery the covered range could be extended to 90 km. The total distance over 500 recharging cycles with the main storage battery only was 34,500 km. The range extending battery extended this distance to 45,000 km, also with 500 recharging cycles

**Claims**

1. Electric traction system, in particular for a vehicle or vessel, comprising a set of traction motors and main traction storage batteries, characterized by range extending batteries, to be connected to electrical charge means, such as the mains or solar cells for charging said range extending battery; battery switch means to connect these range extending batteries in parallel with the main storage batteries for charging or backing up the said storage batteries.

2. Traction system as claimed in claim 1, characterized in that the ranger extending battery capacity is about 20% of the main storage battery capacity.

3. Traction system as claimed in claims 1 and 2, comprising a battery charge control system, characterized in that this battery charge control system switches the range extending battery and the storage battery in parallel for charging and discharging only between storage battery voltages of 1.57 and 2.41 Volt per cell, respectively.

4. Traction system as claimed in one of the foregoing claims, characterized in that the storage battery is of the lead acid or nickel iron type.

5. Traction system as claimed in claims 1-4, characterized in that the range extending battery is of the nickel cadmium, zinc bromide, sodium sulphur type or aluminium air type.

6. Traction system as claimed in one of claims 1-5, characterized by a second set of traction motors, which can be connected to the storage battery individually and successively for driving the vehicle or vessel.

7. Traction system as claimed in claim 6, characterized in that both sets of traction motors are of equal capacity.

8. Traction system as claimed in claims 6 and 7, characterized in that each set of traction motors is controlled by a belonging separate electronic speed control means.

9. Traction system as claimed in claim 8, characterized in that both electronic speed control means are operated by one speed control lever or accelerator pedal.

10. Traction system as claimed in claims 6-9, characterized in that both sets of traction motors drive the same vehicle gear box.

11. Traction system as claimed in claims 6-10, characterized in that each traction motor of a set comprises a thermosensitive device, controlling common traction motor switch means, such that upon exceeding a predetermined temperature within one of the traction motors of a set, this set will be turned off and the other tractiom motor set will be turned on.

12. Traction motor system as claimed in claims 6-11, characterized in that each traction motor set comprises load detecting means, controlling common traction motor switch means, such that upon exceeding a predetermined vehicle load the two sets of traction motors will be turned on in parallel.

13. Traction system as claimed in one of claims 6-12, characterized in that the traction motors are DC-motors.

14. Traction system as claimed in one of claims 6-12, characterized in that each traction motor set consists of one motor.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4141425 (R.T. TREAT) <br> * abstract; figure 20 * | 1, 9, 10, 13 | B60L11/18 |
| A | ELEKTROTECHNISCHE ZEITSCHRIFT, AUSGABE A. vol. 98, no. 1, January 1977, BERLIN DE pages 22 - 26; C. BADER ET AL: "VERGLEICH ELEKTRISCHER ANTRIEBE FUER STRASSENFAHRZEUGE" <br> * page 26 * | 1 | |
| A | CH-A-438962 (YALE & TOWNE GMBH) <br> * claim 1; figure 1 * | 1 | |
| A | DE-A-3347054 (G. PASCHEK) <br> * page 6, line 1, paragraph 16 * | 1 | |

TECHNICAL FIELDS SEARCHED (Int. Cl.5 )

B60L

The present search report has been drawn up for all claims

| Place of search | Date of completion of the search | Examiner |
|---|---|---|
| THE HAGUE | 21 JUNE 1990 | BEYER F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 & : member of the same patent family, corresponding document

EPO FORM 1503 03.82 (P0401)